# EUROPEAN PATENT APPLICATION

(11) **EP 2 007 126 A1**
(43) Date of publication of application: **24.12.2008**
(21) Application number: 08251761.6
(22) Date of filing: 20.05.2008
(51) Int. Cl.: H04N 1/028, H04N 1/047

(54) **Scan flow alignment**

(30) Priority: 21.05.2007 US 804791
(71) Applicant: HEWLETT-PACKARD DEVELOPMENT COMPANY, L.P., Houston TX 77070 (US)
(72) Inventor: Huang, Chingchu K., Ft. Collins, CO 80528 (US); Trick, Edward G., Ft. Collins, CO 80528 (US); Pollard, Stephen, Bristol BS34 8QX (GB); Hunter, Andrew A., Bristol BS34 8QX (GB); Cheung, Nigel M., Bristol BS34 8QX (GB)
(74) Representative: Jackson, Richard Eric

(57) **Abstract**

Among various embodiments of the present disclosure, systems and methods for scan flow alignment are shown. A scan carriage (302) can be aligned and used in a scan flow by selecting a scan starting location (510), determining a reference mark (310) location (520), using the reference mark (310) location as a coordinate system origin (310, 530), moving the scan carriage (302) from the coordinate system origin (310) to the scan starting location (308, 312, 540), and performing a scan from the scan starting location to capture an image (550).

## Description

### Introduction

Scanners are used in a wide variety of settings, including the home and office, to capture electronic images of documents and objects. Conventional scanners operate by moving the scan carriage into and out of a home position. The home position of a scanner is a resting position where a scan carriage returns to between scans. During a scan operation a scan carriage is moved from the home position to perform a dark and white calibration, and may move back to the home position if the remaining distance is not enough to ramp up the scan carriage speed before commencing a scan. Then the scan carriage moves to the scan target on the scan bed to start the scan and to capture the image. The scan carriage returns home after performing the scan and remains there waiting for the next scan. Scanners using this conventional approach use the data from the scan to create the electronic file of the image.

Scanners are capable of achieving better color accuracy by scanning for each scan target twice, each time with a lamp of different optical spectrum. After capturing two images, the images are combined using computer executable instructions storable in a memory and executable by a processor to execute a method that produces better color accuracy than single scan techniques. In order to achieve the best color accuracy when combining two images, the two scan images must have a particular alignment. This requirement is challenging given the fact that cost effective mechanical hardware components are used in scanners to keep the price of the scanners low. A particular alignment of the scan carriage that allows for the images from the scan to be combined into a new image with better color accuracy with conventional scan flow design may not be known due to variance in product manufacturing tolerances since the scanner does not know the precise location of the scan carriage, and the home position itself is imprecise as well. For example, on a given scanner the precise orientation/location of the home position may vary by several millimeters. Furthermore, there will be an additional error introduced when the scan carriage goes back to the home position after calibration before heading out to the scan bed, due to mechanical vibration associated with the scan carriage returning to the home position.

### Brief Description of the Drawings

Figure 1 illustrates an example scanning apparatus suitable to implement embodiments of the present disclosure.
Figure 2 illustrates an embodiment of prior art scan hardware includable in an apparatus, such as the scanning apparatus of Figure 1, used to perform a scan of an object.
Figure 3 illustrates an embodiment of the present disclosure of scan hardware includable in an apparatus, such as the scanning apparatus of Figure 1, used to perform a scan of an object.
Figure 4 illustrates a portion a scanner in which two different light sources are used to perform two scans of an object.
Figure 5 is a block diagram illustrating using a reference mark as the origin of a coordinate system to allow for positional accuracy in successive scans of the same object according to an embodiment of the present disclosure.
Figure 6 illustrates a system suitable to implement embodiments of the present disclosure.

### Detailed Description

Embodiments of the disclosure herein provide systems and methods for a scan flow of the scan hardware in a scanning device. A method for scan flow alignment is disclosed, this method is used to increase the accuracy of the location of the scan carriage in relation to the scan target to approximately 0.01 mm at 600 ppi for a two scan sequence. An embodiment of a method aligning a scan carriage includes selecting a starting location for a scan and determining the location of a reference mark. In various embodiments, the location of the reference mark is found using computer-executable instructions stored a computer readable medium to perform a method for execution by a processor to perform a method that uses a smoothing filter and edge information from the mark with a particular accuracy. This reference mark is used as the coordinate system origin. The scan carriage moves from the coordinate system origin to the scan starting location and a scan of the object is performed from the starting location to capture an image. In some embodiments, a second scan can be performed using the same method for aligning the scan carriage, but with a lamp of different optical spectrum than the lamp used in the first scan. In some embodiments, the scan carriage returns to the home position after performing the first scan, but before performing the second scan.

In some embodiments, the images from two scans can be combined to create a single image. In order to achieve the best color accuracy when combining images to create a single image, the two scan images have a particular alignment. This alignment is difficult to achieve, but the present disclosure includes a scan flow that allows for the proper alignment of the scan carriage despite the fact the scanner does not know the absolute precise position of the scan carriage and the home position for the scan carriage itself is imprecise as well. The scan flow in the present disclosure provides a method to locate a start location for the scan carriage, thus allowing for the scan carriage to move a substantially fixed distance between a reference mark and the starting location of the scan for each scan of a given object. This allows for the desired positional accuracy in a scan by having the scan carriage start the process by moving from an origin, which is the reference mark, to the starting location for a scan of an image. For a scan of a given object, this scan flow removes error caused by imprecision in the scan hardware by having the scan process start approximately from the same origin position and move a substantially constant, fixed distance to the scan starting location.

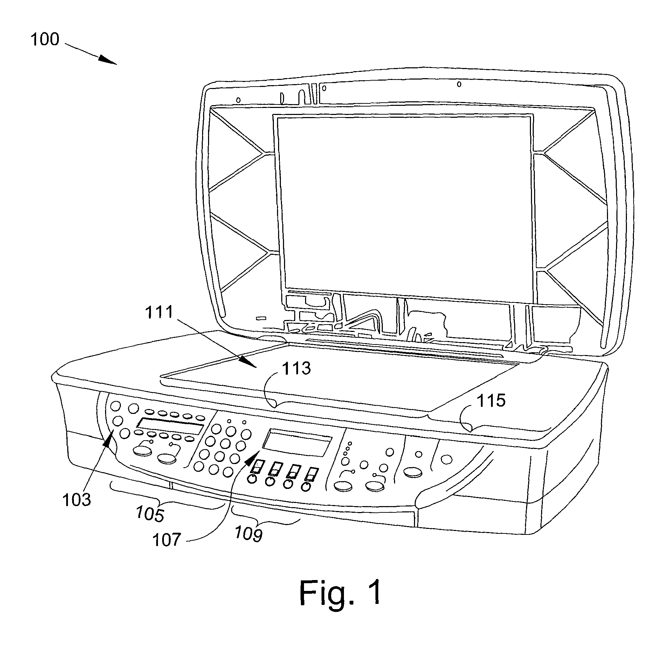

Figure 1 illustrates an example scanning apparatus suitable to implement embodiments of the present disclosure. The embodiment of Figure 1 illustrates an image scanning apparatus 100 that can, in various embodiments, be connected to a number of remote devices to form an image scanning system. Remote devices can include, for example, computing devices such as one or more desktop computers, laptop computers, and/or workstations, among other types of devices.

In some embodiments, the image scanning apparatus 100 can be included as part of, or connected to form, a multi-functional system including more than one function mode, such as scanning, copying, faxing, and/or printing. Such a system can include, in various locations within scanning apparatus 100, one or more processors and/or application modules suitable for executing software programming (e.g., executable instructions) and can include, in various locations, one or more memory devices. The image scanning system that includes the image scanning apparatus 100 can include one or more of the embodiments described herein.

The embodiment of Figure 1 illustrates an image scanning apparatus 100 that includes one or more control keys 103 that can control on/off status, sleep status, and/or function mode, among other activities. The image scanning apparatus 100 can include one or more display screens with a number of associated user input interfaces 105 that can be used, for example, in assigning a label to an image being scanned.

The image scanning apparatus 100 also can include one or more scan mode display screens 107. In some embodiments, the display screens can display information using LCD graphics, among other display types. Scan mode selectors 109 can be used for control of the scan operation functionalities described below.

The embodiment of the image scanning apparatus 100 illustrated in Figure 1 includes a scan bed 111 that can, in various embodiments, be formed from any suitable wavelength transparent, semi-transparent, or translucent material that allows throughput of illuminating and/or reflected light. The scan bed 111 can have various geometric formats of various sizes (e.g., squares, rectangles, circles, ovals, trapezoids, etc.) to accommodate particular objects to be associated therewith and scanned therethrough. Although the scan bed 111 is usually referred to in the singular in the present disclosure, some embodiments can have more than one scan window to enable use of various configurations of arrays of multiple scan carriages.

In various embodiments, the multiple scan carriages described in the present disclosure can be located within the housing of the image scanning device 100 and one or more of the multiple scan carriages can be associated with a light source for illumination of an object (not shown) laid on or placed above the scan bed 111. Light can be reflected by the object through the scan bed 111 and detected by a number of photosensitive elements associated with each of the multiple scan carriages.

In some embodiments, the scan bed 111 can have a number of indicators 113 associated therewith. The indicators 113 can be arranged in various positions and patterns and can be used for a variety of purposes.

As shown in the embodiment illustrated in Figure 1, an image scanning apparatus 100 as described in the present disclosure can have a section of the housing 115 on one or more edge of the scan bed 111 with a volume capable of containing the multiple scan carriages. The one or more sections of housing 115 can allow an array of scan modules to begin and end passage across a scan bed 111 outside a perimeter of one or more scan windows.

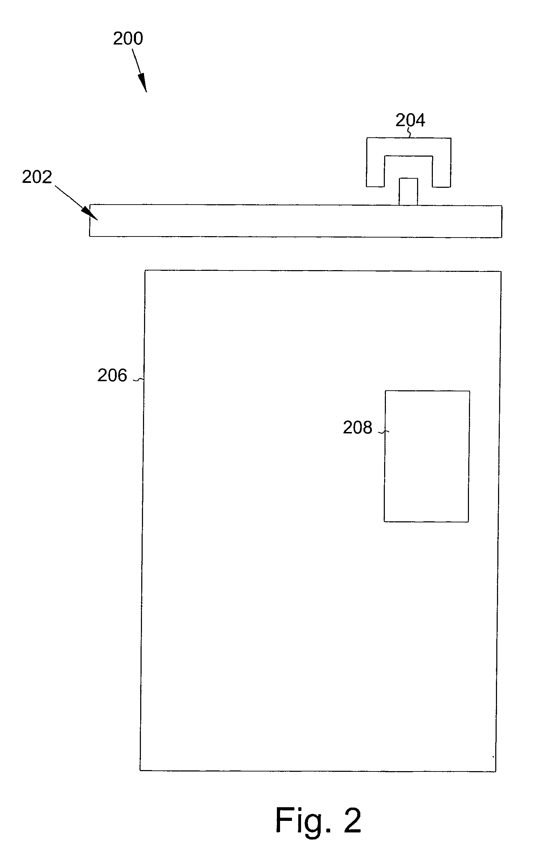

Figure 2 illustrates an embodiment of prior art scan hardware includable in an apparatus, such as the scanning apparatus of Figure 1, used to perform a scan of an object. The scan hardware 200 of Figure 2 includes a scan carriage 202, a home position 204 for the scan carriage 202, and a scan bed 206. The home position 204 is where the scan carriage 202 is located when the scan carriage is not being used. Also, the scan carriage 202 returns to the home position 204 after each scan. The scan carriage 202 is used to capture an image of an object 208 placed on the scan bed 206. The scan carriage 202 captures the image an object 208 placed on the scan bed 206 by the use of various configurations of components that can include any number of mirrors, lenses, filters, light sources, and/or photosensitive elements, for example, charge coupled devices (CCD), contact image sensors (CIS), etc., among other components.

In a scanning operation using the scan hardware of the prior art shown in Figure 2, an object 208 is placed on the scan bed 206. The scan starting location is selected based on the placement of the object 208 on the scan bed 206. The scan starting location is where the scan carriage 202 begins the process of capturing an image of the object 208. The scan starting location can be selected manually, through the use of a mouse, a display, and a low resolution scan of the object 208, or automatically by a processor that has executable instructions to select the scan starting location. The scan carriage 202 starts from the home position 204, conducts a dark and white calibration, moves to the scan starting location, and then passes under the object 208 to record an image of the object. The scan carriage 202 then returns to the home position, ready for the next scan.

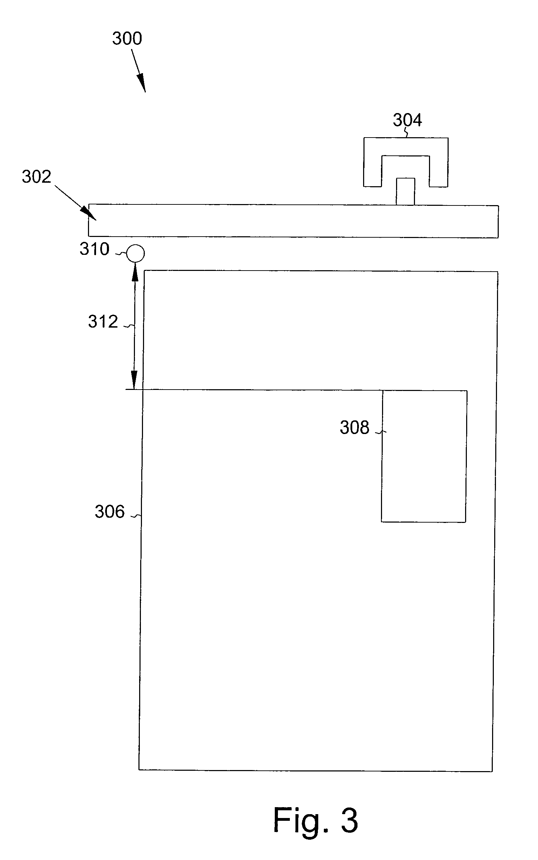

Figure 3 illustrates an embodiment of scan hardware includable in an apparatus, such as the scanning apparatus of Figure 1, used to perform a scan of an object. The scan hardware 300 illustrated in Figure 3 represents the hardware configuration for a scanner that includes the embodiments of the present disclosure. The scan hardware 300 of Figure 3 includes a scan carriage 302, a home position 304 for the scan carriage 302, a scan bed 306, and a reference mark 310. The home position 304 is where the scan carriage 302 is located when the scan carriage is not being used. The scan carriage 302 is used to capture an image of an object 308 placed on the scan bed 306. The scan carriage 302 captures the image an object 308 placed on the scan bed 306 by the use of various configurations of components that can include any number of mirrors, lenses, filters, light sources, and/or photosensitive elements, for example, charge coupled devices (CCD), contact image sensors (CIS), etc., among other components.

In scanning operations implementing embodiments of the present disclosure, an object 308 is placed on the scan bed 306. The scan starting location is selected based on the placement of the object 308 on the scan bed 306. The scan carriage 302 starts from the home position 304. The scan carriage 302 moves from the home position 304 and locates the reference mark 310. The reference mark 310 is located by using a computer readable medium having computer-executable instructions stored thereon for execution by a processor to perform a method that uses a smoothing filter and edge information from the mark with a particular accuracy. The center of the reference mark 310 is found by a method using the weighted sum of the edge image of the reference mark 310. The location of the reference mark 310 is used as the coordinate system origin to ensure the scan carriage 302 scans similar portions of object 308 in consecutive scans of object 308.

A dark and white calibration is performed either before or after the reference mark 310 location is determined. After the calibration is completed and the reference mark 310 location is determined, the scan carriage 302 moves directly to the scan starting location. The scan carriage 302 then passes under the object 308 to record an image of the object. After completing the first scan of object 308, the scan carriage 302 moves back to the home position and starts a second scan of object 308 using the same process. By using the reference mark 310 as the starting point for each scan, the scan carriage moves a distance 312 to the starting location of the scan for every scan. The reference mark 310 provides an origin for the scan carriage to start the scan operation in both the vertical and horizontal coordinates of the scan plane. The scan carriage's positional accuracy has the largest variability in the direction of the scan carriage's movement over the object 308, so providing an origin for the scan carriage 302 in that direction allows the desired positional accuracy to be achieved. This ensures that scan carriage 302 is starting its scan from substantially the same location each time, and therefore, is able to capture approximately the same image in each scan of object 308. The image from the first scan and the image from the second scan are combined to form a single, new image that has better color accuracy than the either of the first or second scans individually.

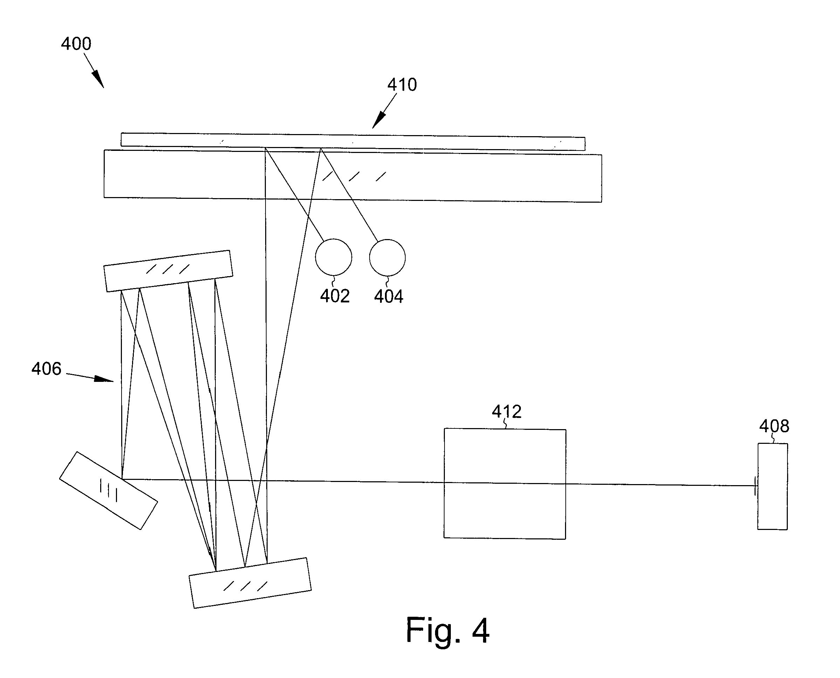

Figure 4 illustrates a portion of a scanner in which two light sources 402, 404 are depicted that are used to perform a scan of an object. Scanner 400 performs two scans, each capturing an image of the object. One of the two light sources 402, 404 is used while performing a first scan of an object and the light source not used in the first scan, light source 402 or 404, is used while performing a second scan of the object. The two images can then be combined using the method disclosed in Great Britain patent application number GB0608362.0 titled 'Image Processing System And Method' and filed October 10, 2005.

Light sources 402, 404 are connected to a common drive train (not shown), along with the folded optics 406 and three rows of RGB charge-coupled device (CCD) elements 408. Both light sources can be translated across a material to be scanned (410) together. Light sources 402, 404 are displaced from one another by a small distance and can extend across the width of a scanner or a portion thereof. For example, light sources can extend across the scanner panel in order to ensure that all material placed on the scanner panel can be sufficiently illuminated. Material to be scanned is separately scanned at least twice by scanning light sources 402, 404 across the object. One, other or both light sources are selected (illuminated) during a scan. The scans can occur at different times and/or speeds. According to an embodiment, a portion of an object to be scanned is firstly illuminated with one light source (402) and then the other (404). Image data representing an image of the portion is then generated using light reflected from or transmitted through the portion (depending on the desired nature of the scanner). The data is generated using the CCDs 408 (or similar image elements such as CMOS elements for example, or an area image sensor) which are operable to generated image data using light incident upon them. Light can be passed through a lens 412, for example, before it reaches the CCD elements. The image data comprises at least six color channels of information (e.g. RGB image data resulting from illumination with light source 402 and R'G'B' image data resulting from illumination with light source 404). Compared with the normal three channels of image data present from a conventional scan using a single light source, the six channels comprise additional color information which can be used to improve the accuracy of resultant scan data. The light sources 402, 404 are each configured to have different spectral response frequency characteristics to produce enhanced color information in the scanned image of the object. It should be understood that embodiments of the present invention may be used in both reflective and transmissive scanning applications.

The six color channels of data generated by the two light sources 401, 402 are decomposed into respective higher and lower spatial frequency components. For example, for each channel a low pass filter can be applied to the data for the channel (such as a Gaussian spatial filter for example). This results in data in which the higher spatial frequency image components have been filtered out. This can be repeated for each channel, and the result subtracted from the original data to recover the complementary high frequency component for a channel. The combination of the lower and higher frequency channel components will result in the original image for each channel.

A 3x6 color transform is applied to the lower frequency components. This transform does not significantly amplify noise with respect to the original component if the noise reduction resulting from the low pass filter is sufficient. This is because, in general, visible noise is carried in the higher spatial frequency components of an image, and therefore the application of the transform to a lower frequency component, i.e. a component in which these noise elements have been greatly reduced, will not substantially amplify noise with respect to the original, if at all.

A 3x6 color transform can be applied to the higher frequency components. This transform can be chosen to suppress noise since the image details will have high correlation for the different illuminants, while the image noise will be uncorrelated for the different illuminants. Alternatively and advantageously, when there may be some relative misalignment of the images from the two illuminants, a 3x3 color transform is applied only to the 3 high frequency channels corresponding to a single scan. This scan is chosen as the one that gives the best overall color accuracy and/or noise performance. This is in turn dependent on which of the individual light sources gives the best color accuracy and/or noise performance. It is often possible that one scan can be performed with lower fidelity, for example with lower resolution or with worse noise performance, as only the low spatial frequencies are needed for the 3x6 color transform - in this case it is clear that the other scan provides the high frequency information. Another possibility is that one scan has both light sources on and the other is the absence of one or other light sources - it is clear then that the high frequency should come from the 'both light source on' condition and that the choice is now which light source to turn off for the second scan.

The 3x6 and 3x3 transforms are chosen to map the data from the channels to the same target color space. The 3x6 transform gives better color accuracy because it has more color information (6 channels not 3), however it may also amplify noise in order to get the improved color accuracy. In order to avoid this, a 3x6 transformation need only be applied to the low frequency components, which have lower noise (as explained above). The higher frequencies (derived from only 3 channels of a single scan) have a 3x3 transformation applied to them. Since color errors in the high frequencies cannot generally be seen, this does not matter in practice. The 3x3 transform is chosen so as not to amplify noise greatly. The lower accuracy of colors in the higher frequency components will not affect overall quality since the high frequencies only influence a small spatial extent and are largely achromatic.

The resulting (transformed) 3 low frequency channels and 3 high frequency channels are combined to form the resultant target image. Advantageously, the resultant image will be substantially free from noise amplification and because the high frequency component comes from a single scan, it will also be substantially (or completely in some cases) free from other artifacts such as ghosting and blurring.

Furthermore because one scan only contributes low frequency components it is possible to perform that scan with lower fidelity, for example with lower resolution, than the other provided that a substantially equivalent low frequency component can be generated from each scan. Additionally, a lower resolution scan can be performed first and then the conversion from 6 to 3 channels performed on the fly as the second higher resolution scan is performed (with consequent advantage in terms of memory storage requirements for example).

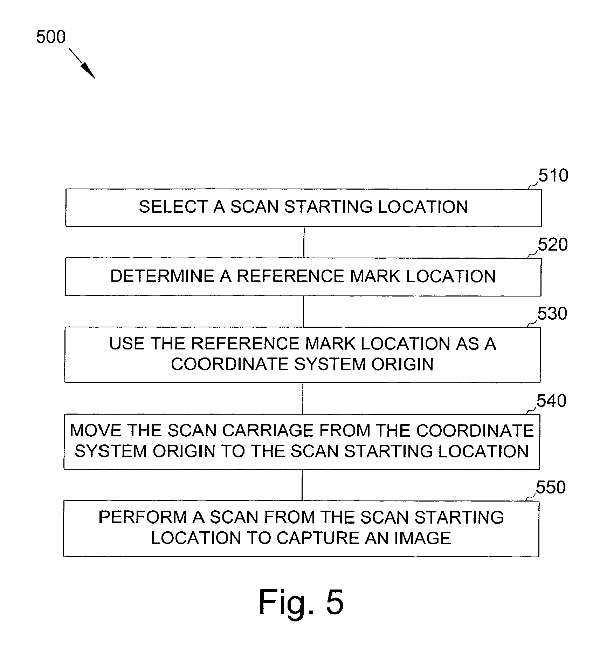

Figure 5 is a block diagram illustrating using a reference mark as the origin of a coordinate system to allow for positional accuracy in successive scans of the same object according to an embodiment of the present disclosure. Figure 5 illustrates a method that allows for alignment of a scan carriage during a scan operation.

As shown in Figure 5, the method includes computer executable instructions storable in a memory and executable by a processor that can be used to conduct a scan with the precision required for scanners that implement a combining feature to create images that have better color accuracy. The method 500 conducts a scan by selecting the starting location for a scan 510 and determining the location of the reference mark 520. The reference mark is used as the coordinate system origin 530. The reference mark provides an origin for the scan carriage to start the scan operation in both the vertical and horizontal coordinates of the scan plane. The scan carriage is moved from the coordinate system origin to the scan starting location 540 and a scan is performed from the starting location to capture an image of an object 550.

Method 500 allows for the images from two scans with a particular positional accuracy to be combined to form an image of approximately 0.01 mm at 600 ppi scan resolution with great color accuracy because when the scan carriage is at the coordinate system origin 530 it moves a fixed distance to the scan starting location 550. This distance is nearly constant for every scan of a given object that occurs, if the object is placed on the scan bed and does not move from the initial position in which it was placed on the scan bed. Because the scan carriage moves a substantially fixed distance from an origin to a starting location, approximately an identical image is captured during each scan of an object allowing these images to be combined to form an image with improved color accuracy.

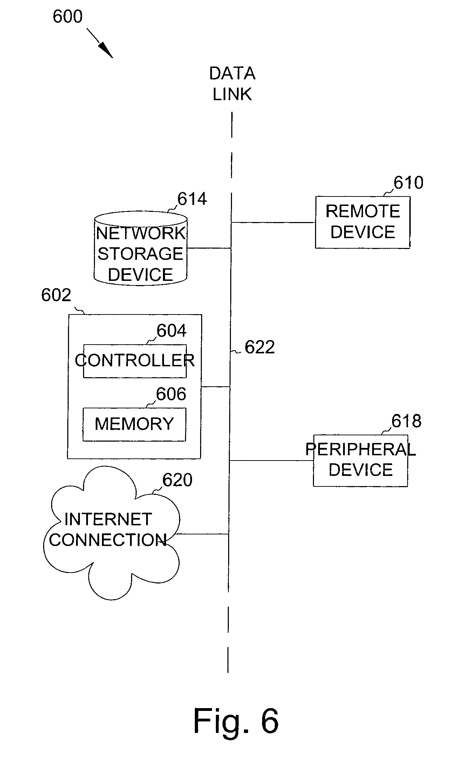

Figure 6 illustrates a system suitable to implement embodiments of the present disclosure. Figure 6 illustrates that a scanning device, including embodiments described herein, can be incorporated as part of a system 600. As shown in Figure 6, the system includes a scanning device 602, such as a scanner as shown in Figure 1.

The system 600 is operable to receive data and interpret the data from the scan of an image in a particular image position. The system 600 can include software and/or application modules thereon for receiving and interpreting data in order to achieve the desired image quality functions. As one of ordinary skill in the art will appreciate, the software and/or application modules can be located on any device that is directly or indirectly connected to the scanning device 602 within the system 600.

The scanning device 602 can include a controller 604 and a memory 606. The controller 604 and the one or more memory devices 606 are operable to implement the method embodiments described herein. In the various embodiments, the one or more memory devices 606 include memory devices 606 on which data, including computer readable instructions, and other information of the like can reside.

As shown in the embodiment of Figure 6, scanning device 602 can be networked to one or more remote devices 610 over a number of data links, shown as 622. As one of ordinary skill in the art will appreciate upon reading this disclosure, the number of data links 622 can include one or more physical and one or more wireless connections, and any combination thereof, as part of a network. That is, the scanning device 602 and the one or more remote devices 610 can be directly connected and can be connected as part of a wider network having a plurality of data links 622.

In various embodiments, a remote device 612 can include a device having a display such as a desktop computer, laptop computer, a workstation, hand held device, or other device as the same will be known and understood by one of ordinary skill in the art. The remote device 612 can also include one or more processors and/or application modules suitable for running software and can include one or more memory devices thereon.

As shown in the embodiment of Figure 6, a system 600 can include one or more networked storage devices 614, e.g. remote storage database and the like, networked to the system. Likewise, the system 600 can include one or more peripheral devices 618, and one or more Internet connections 620, distributed within the network.

The network described herein can include any number of network types including, but not limited to a Local Area Network (LAN), a Wide Area Network (WAN), Personal Area Network (PAN), and the like. And, as stated above, data links 622 within such networks can include any combination of direct or indirect wired and/or wireless connections, including but not limited to electrical, optical, and RF connections.

Memory, such as memory 606 and memory 614, can be distributed anywhere throughout a networked system. Memory, as the same is used herein, can include any suitable memory for implementing the various embodiments of the invention. Thus, memory and memory devices include fixed memory and portable memory. Examples of memory types include NonVolatile (NV) memory (e.g. Flash memory), RAM, ROM, magnetic media, and optically read media and includes such physical formats as memory cards, memory sticks, memory keys, CDs, DVDs, hard disks, and floppy disks, to name a few.

Software, e.g. computer readable instructions, can be stored on such memory mediums. Embodiments of the invention, however, are not limited to any particular type of memory medium. And, embodiments of the invention are not limited to where within a device or networked system a set of computer instructions is stored on memory for use in implementing the various embodiments of invention.

As noted, the system embodiment 600 of Figure 6 can include one or more peripheral devices 618. Peripheral devices can include any number of peripheral devices in addition to those already mentioned herein. Examples of peripheral devices include, but are not limited to, scanning devices, faxing devices, copying devices, modem devices, and the like.

Although specific embodiments have been illustrated and described herein, those of ordinary skill in the art will appreciate that an arrangement calculated to achieve the same results can be substituted for the specific embodiments shown. This disclosure is intended to cover adaptations or variations of various embodiments of the present disclosure. It is to be understood that the above description has been made in an illustrative fashion, and not a restrictive one. Combination of the above embodiments, and other embodiments not specifically described herein will be apparent to those of skill in the art upon reviewing the above description. The scope of the various embodiments of the present disclosure includes other applications in which the above structures and methods are used. Therefore, the scope of various embodiments of the present disclosure should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the disclosed embodiments of the present disclosure have to use more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method for scan flow alignment (Figure 5), comprising:
determining a reference mark (310) location (520);
using the reference mark (310) location as a coordinate system origin (530); and
moving a scan carriage (302) from the coordinate system origin (310) to a scan starting location (540).

2. The method of claim 1, wherein the method includes performing a first scan (550) from the scan starting location to create a first image, wherein the scan carriage (302) moves from a home position (304), to the coordinate system origin (310), and to the scan starting location (308, 312).

3. The method of claim 2, wherein the scan carriage (302) moves a distance (312) between the coordinate system origin (310) and the scan starting location (308, 312) during the first scan (550).

4. The method of claim 2, wherein the method includes performing a second scan (550) to create a second image, wherein the scan carriage (302) moves from the coordinate system origin (308) to the scan starting location (308,312).

5. The method of claim 4, wherein the second scan (550) is performed with a lamp (402, 404) of different optical spectrum than the first scan (550).

6. The method of claim 4, wherein the method includes combining the image from the first scan (550) and image from the second scan (550) to create a new image.

7. The method of claim 4, wherein the scan carriage (302) returns to a home position (304) before performing the second scan (550) and wherein the scan carriage (302) moves from the home position (304), to the coordinate system origin (310), and to the scan starting location (308, 312).

8. The method of claim 4, wherein the scan carriage (302) moves the distance (312) between the coordinate system origin (310) and the scan starting location (308, 312) during the second scan (550).

9. The method of claim 4, wherein the method includes returning the scan carriage (302) to the home position (304) after the first scan (550) and before performing the second scan (550).

10. The method of claim 1, wherein the method includes locating a reference mark (310) having a diameter between 0.5 and 4.0 millimeters (mm).
